# DEMANDE DE BREVET EUROPEEN

(11) **EP 1 983 480 A1**
(43) Date de publication de la demande: **22.10.2008**
(21) Numéro de dépôt: 08154857.0
(22) Date de dépôt: 21.04.2008
(51) Int. Cl.: G06Q 20/00, G07F 7/08

(54) **Terminal de paiement, procédé et programme associés**

(30) Priorité: 20.04.2007 FR 0702868
(71) Demandeur: Ingenico, 92200 Neuilly-sur-Seine (FR)
(72) Inventeur: Naccache, David, 75018 Paris (FR); Troumelin, Michael, 92400 Courbevoie (FR)
(74) Mandataire: Bioret, Ludovic

(57) **Abrégé**

Le terminal (1) de paiement électronique comprend des moyens (2,3) de saisie de données, un processeur (9) et une mémoire (39). La mémoire (39) contient :
- une structure (124) agencée pour répertorier au moins un identificateur de client, un numéro d'identification personnel et un montant associés ;
- un programme (41) comprenant des instructions (120,130) pour mémoriser dans un exemplaire de la structure (124) après saisie, ledit identificateur de client et ledit numéro d'identification personnel.

Un même exemplaire de la structure (124) est ensuite mis à jour localement au gré de paiements et d'approvisionnements effectués sur le terminal (1) pour le compte du client identifié.

## Description

Le domaine de l'invention est celui des moyens de paiement électronique qui évitent les manipulations de billets de banques et ou de pièces de monnaie pour chaque achat effectué chez un commerçant.

On connaît les systèmes et procédés de paiement par carte bancaire. Généralement, le titulaire de la carte bancaire doit posséder un compte bancaire, bien souvent payer un abonnement et de tels systèmes ou procédés requièrent un niveau de sécurité élevé pour faire barrage à de nombreuses tentatives de fraude.

Le document EP0979495B1 indique un processus de l'état de la technique dans lequel un lecteur de carte à puce additionne le montant d'un achat effectué au moyen d'une carte, à un cumul des achats effectués par des acheteurs précédents de façon à transmettre à une banque, par exemple en fin de journée, ce cumul qui représente une créance du vendeur. Pour remédier à certains types de fraudes, le document précité préconise une exécution d'algorithmes de chiffrement dans la carte à puce au moyen d'une clé privée et d'une clé publique. Pour rendre un tel système moins fragile vis-à-vis des fraudeurs, les auteurs préfèrent adjoindre des complications telles qu'une certification de clé publique.

Le document WO01/18756 divulgue un porte-monnaie électronique immédiatement rechargeable à un point de vente qui se matérialise par l'existence d'un deuxième solde au niveau de la carte bancaire. Le réapprovisionnement au point de vente ne peut être proposé que sur une carte adossée à un compte bancaire.

Le document WO03/027919 présente une installation de traitement de données pour porte-monnaie électronique dans laquelle un dispositif de communication comporte une mémoire dite de « compte local de façon à transférer des données représentatives d'une somme locale. Les moyens de communication sont nécessités par l'existence d'un compte distant.

Au vu des documents précités, la centralisation et la complexité de dispositifs cryptographiques, semblent inévitables pour assurer un bon déroutement de paiements au moyen de dispositifs électroniques. Ceci n'est pas satisfaisant en termes de souplesse et de facilité d'utilisation.

Pour s'affranchir de la nécessité de transactions avec une banque, le document FR2827058 expose un système de paiement pour porte-monnaie électronique au moyen duquel un paiement est effectué en défalquant un montant d'achat du montant resté en mémoire du porte-monnaie électronique. Une opération de rechargement du porte-monnaie électronique à partir d'un terminal de paiement, évite le rebus d'un porte-monnaie à montant pré chargé lorsque le solde est épuisé.

Cette dernière solution présente encore certains inconvénients tels que la potentialité de rechargements frauduleux sauf à mettre en oeuvre des dispositifs cryptographiques inévitablement complexes ou pour le moins à limiter un montant disponible ou de rechargement. On note aussi l'incommodité qui peut résulter d'une indisponibilité de support matériel du porte-monnaie au moment de se présenter chez un commerçant pour raison de vol, de perte, de prêt à un ami ou à un autre membre de la famille, ou d'un oubli pur et simple.

Pour remédier aux inconvénients qui ressortent de l'état connu de la technique, un objet de l'invention est un terminal de crédit résidant chez un commerçant.

Le terminal de crédit est réalisé au moyen d'un terminal de paiement électronique comprenant des moyens de saisie de données, un processeur et une mémoire contenant :
- une structure agencée pour répertorier au moins un identificateur de client, un numéro d'identification personnel et un montant associés ;
- un programme comprenant des instructions pour mémoriser dans un exemplaire de la structure après saisie, ledit identificateur de client et ledit numéro d'identification personnel.

Ainsi un compte client peut être créé puis géré localement dans le terminal. Un gestionnaire du terminal, typiquement le commerçant peut ensuite créditer et débiter le compte en fonction de sommes d'argent données globalement pour alimenter le compte ou de prix à payer au détail.

Dans un mode de réalisation, le terminal comprend des moyens de lecture de support matériel d'information et le programme comprend des instructions pour jumeler le support matériel d'information avec l'exemplaire de la structure.

Un objet de l'invention concerne aussi un procédé pour permettre d'effectuer un paiement de façon locale. Le procédé comprend une étape pour associer dans un terminal de paiement, un compte local à un client, et une étape pour lier au compte local, un numéro d'identification personnel choisi par le client et pour enregistrer ledit compte local dans le terminal de paiement.

Avantageusement dans l'étape pour associer le compte local au client, un support matériel est jumelé au dit compte local.

Particulièrement, le procédé comprend une étape pour retrouver le compte local dans le terminal.

Avantageusement dans l'étape pour retrouver le compte local, le terminal identifie le compte au moyen dudit support matériel.

Plus particulièrement le procédé comprend une étape pour créditer dans le terminal le compte local avec un montant à ajouter saisi par un gestionnaire du terminal.

Une étape pour débiter dans le terminal le compte local avec un montant à retrancher saisi par le gestionnaire du terminal, est soumise à une validation du montant à retrancher au moyen du numéro d'identification personnel.

Utilement, un reçu est imprimé dans l'étape pour créditer le montant à ajouter ou respectivement dans l'étape pour débiter le montant retrancher.

L'invention concerne aussi un programme de terminal de paiement comprenant des moyens de code de programme pour effectuer la totalité des étapes de l'une ou l'autre version du procédé lorsque le programme fonctionne sur un terminal de paiement.

Un produit de programme d'ordinateur comprend des moyens de code de programme stockés sur un médium lisible par le terminal de paiement pour mettre en oeuvre le procédé lorsque le produit de programme fonctionne sur un terminal de paiement.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, un terminal de paiement selon l'invention;
- figure 2, des étapes de procédé conforme à l'invention;
- figure 3, un agencement de moyens conforme à l'invention:

- figure 4, un logigramme de mise en oeuvre des étapes essentielles du procédé ;
- figure 5, une structure de données conforme à l'invention;
- figures 6 et 7, des logigrammes d'exploitation du procédé.

L'invention se rapporte à un terminal de paiement électronique comprenant des moyens de saisie de données, un processeur et une mémoire contenant une structure de données agencée pour répertorier au moins un identificateur de client, un numéro d'identification personnel et un montant associés avec un programme comprenant des instructions pour mémoriser dans un exemplaire de la structure de données après saisie, ledit identificateur de client et ledit numéro d'identification personnel.

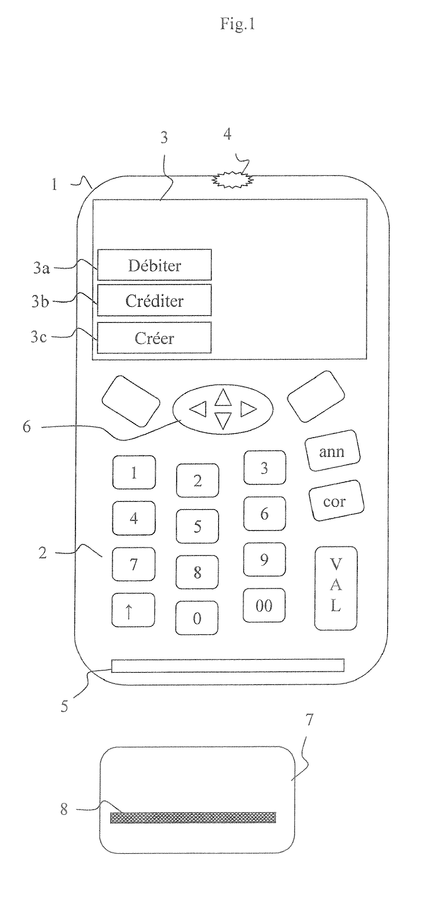

En référence à la figure 1, un terminal 1 de paiement comprend un clavier 2, un écran 3, un coupleur de communication 4 et un lecteur 5 de carte à puce, de carte magnétique ou de carte sans contact. Un terminal de paiement comprend aussi d'autres éléments non représentés ici tels que par exemple une imprimante. L'écran 3 est avantageusement équipé d'une dalle tactile qui permet de réaliser des fonctions de touches numériques semblables à celles d'un clavier par pression sur un endroit de l'écran repéré par une image particulière. On peut aussi prévoir une molette, un pavé tactile faisant office de souris ou comme représenté, un groupe de touches fléchées 6 pour déplacer un curseur sur l'écran 3.

Habituellement, un terminal de paiement est équipé pour effectuer des opérations de débit. Un utilisateur introduit sa carte à puce dans le lecteur 5 à travers une fente, regarde un montant de transaction affiché sur l'écran 3 et s'il est d'accord pour payer ce montant, entre son code PIN en en tapant les chiffres sur les touches du clavier et en validant ce code au moyen d'une touche prévue à cet effet. Le terminal vérifie alors la validité du code en dialoguant avec la puce et débite le compte de l'utilisateur en dialoguant de plus avec un serveur distant, non représenté, au moyen du coupleur de communication 4. Le coupleur de communication 4 est de nature filaire tel qu'on en rencontre parfois aux caisses de grands magasin ou de nature sans fil au moyen par exemple d'ondes électromagnétiques.

On retrouve les mêmes fonctionnalités habituelles de débit de compte sur terminal de paiement avec une carte 7 équipée d'une mémoire permanente 8 telle qu'une bande magnétique. On trouve rarement des fonctionnalités de crédit sur un terminal de paiement mis à part dans les applications de porte-monnaie électronique. A la différence des terminaux de paiement habituels, les fonctions de crédit et de débit ne s'opèrent ni sur un compte résident dans la carte comme c'est le cas du porte monnaie électronique, ni sur un compte résident dans un serveur distant comme c'est le cas des applications bancaires mais sur un compte résident dans le terminal 1 comme cela va être expliqué par la suite. De plus le terminal 1 représenté sur la figure 1 possède des fonctionnalités de création de compte qui n'existent pas sur les terminaux habituels.

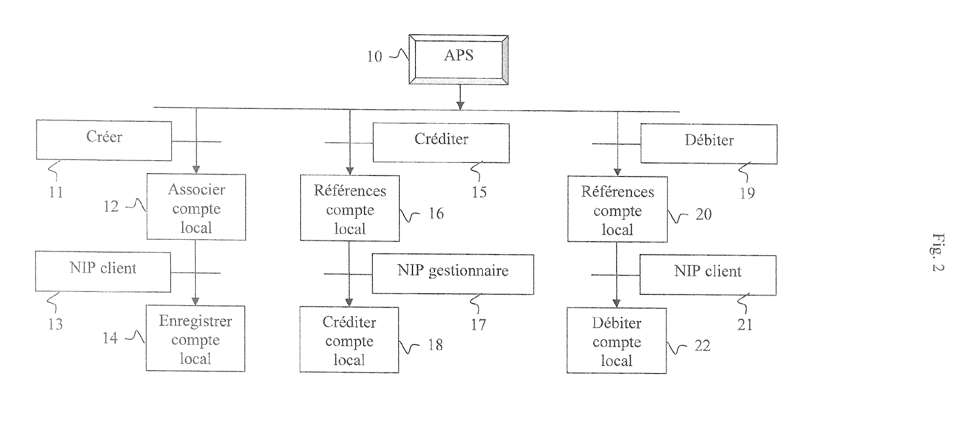

En référence à la figure 2, on décrit à présent des étapes de procédé conforme à l'invention. Une application numérique de paiement sécurisée ou non sécurisée est dans une étape initiale 10 en écoute d'interactions extérieures prédéterminées pour valider une transition 11, 15, 19.

La transition 11 est validée à détection d'un signal qui commande de créer un moyen de paiement. Ce signal est généré par le terminal 1 lorsqu'un utilisateur, par exemple presse une touche dédiée à cet effet ou une combinaison de touches alphanumériques sur le clavier 2, effleure une zone 3c tactile dédiée de l'écran 3 ou positionne un curseur sur la zone 3c au moyen de la molette 6. Typiquement l'utilisateur est dans ce cas le commerçant titulaire du terminal 4.

Selon une première variante de mise en oeuvre du procédé, le moyen de paiement est simplement un fichier en mémoire du terminal 1 agencé pour répertorier un compte de crédit que le commerçant décide d'attribuer localement à un client qui se présente dans son échoppe.

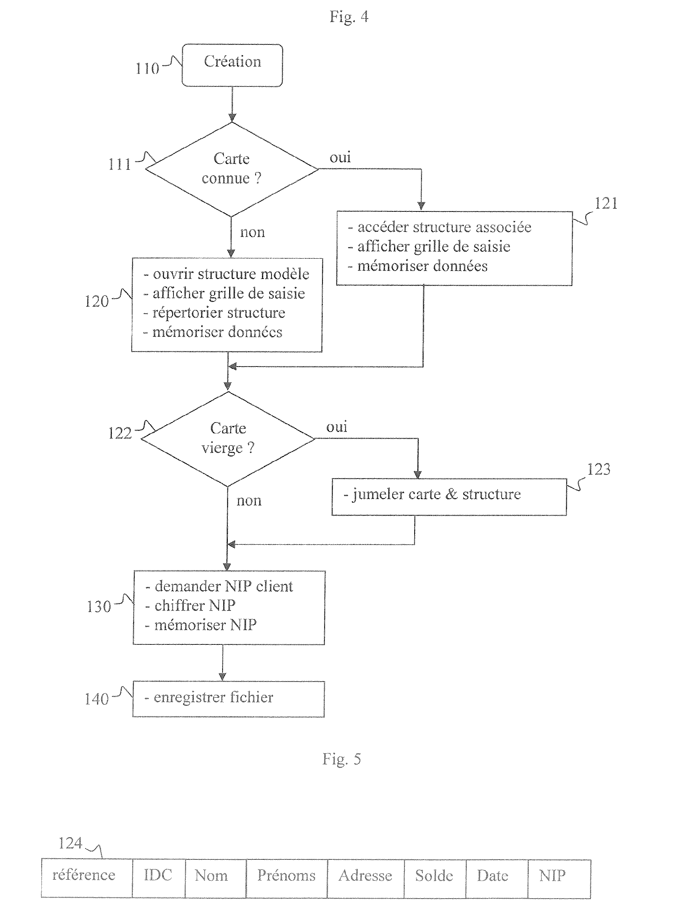

Une validation de la transition 11 active une étape 12 qui associe le compte local à une identification du client. Cette étape est typiquement réalisée au moyen d'instructions de programme exécutables par un processeur du terminal 1 à présent décrites en référence à la figure 4.

Parmi plusieurs modes de réalisation possibles de programme, un premier mode associe un fichier différent à chaque client. Dans ce premier mode, le programme comprend des instructions 120 pour ouvrir un fichier modèle, afficher une grille de saisie sur l'écran 3, nommer le fichier ouvert de façon à y mémoriser les données saisies. Une structure possible 124 de fichier est illustrée sur la figure 5. Ce fichier contient différents champs initialement vides dont une première partie est destinée à mémoriser la désignation du client à l'aide par exemple du nom, d'un ou plusieurs prénoms, de l'adresse du domicile. Une deuxième partie est destinée à mémoriser un solde d'argent disponible positif ou nul, voire négatif si le commerçant l'accepte. La référence du fichier est alors simplement le nom du fichier. Le fichier peut comprendre d'autres champs destinés à mémoriser d'autres données telles qu'une date de modification du solde ou un numéro d'identification personnel (NIP).

Un deuxième mode de réalisation associe à chaque client une ligne de table sous forme de la structure 124 représentée en figure 5 au moyen d'une référence de ligne contenue dans un fichier commun. Dans ce deuxième mode, le programme comprend des instructions 120 pour ouvrir le fichier commun, afficher la grille de saisie sur l'écran 3, générer une nouvelle ligne vide sur le modèle de la structure représentée en figure 5, pour y mémoriser les données saisies.

Quelque soit le mode de réalisation choisi, la structure 124 réside dans le terminal 1.

Dans l'étape 12, la grille de saisie affichée à l'écran permet à l'utilisateur, préférentiellement un administrateur comme par exemple le commerçant, de remplir la structure 124 avec les coordonnées du client au moyen du clavier 2 ou de tout autre dispositif adapté.

Le programme comprend des instructions 130 pour demander un numéro d'identification personnel (NIP) et mémoriser le NIP lorsque la grille est complète. Une fenêtre de saisie s'ouvre sur l'écran 3 avec un message de type « entrer numéro personnel client ». Lorsque la fenêtre de saisie s'ouvre à l'écran, le commerçant invite son client à imaginer un NIP et à le saisir sur le clavier du terminal 1 en en gardant le secret. Le commerçant n'a pas connaissance du NIP. Le client approuve les données affichées dans la grille de saisie en frappant son NIP sur le clavier et en terminant par appuyer sur une touche de validation du terminal 1. Les instructions 130 sont préférentiellement prévues aussi pour chiffrer le NIP et éventuellement masquer la valeur du NIP à l'écran lors de sa frappe sur le clavier 2. La valeur du NIP est mémorisée, de préférence chiffrée, dans le champ de la structure 124 prévu à cet effet.

La validation du NIP par le client a pour effet de valider une transition 13 qui active alors une étape 14 dans laquelle le fichier nouvellement créer dans le premier mode de réalisation ou le fichier commun modifié dans le deuxième mode de réalisation, est enregistré en mémoire permanente du terminal 1.

Selon une deuxième variante de mise en oeuvre du procédé, le moyen de paiement décrit précédemment est agrémenté d'un support matériel que le client conserve avec lui.

Le commerçant titulaire du terminal de paiement, se procure au préalable un paquet de cartes vierges. On trouve actuellement sur le marché des cartes vierges telles que les cartes à puce et/ou à bande magnétique qui sont formatables pour d'autres domaines que celui des cartes bancaires, par exemple pour les domaines des transports, de la santé, du téléphone ou autre. Bien que des cartes à microprocesseur soient aussi utilisables, les cartes à piste magnétique conviennent aussi pour réaliser le support matériel de la deuxième variante. Ce qui importe en fait est que le support matériel ait des dimensions physiques et une mémoire agencées de façon à permettre au terminal de paiement au moins d'y lire numériquement, voire d'y inscrire une valeur qui distingue de façon unique le support matériel d'autres supports matériels. Une étiquette de type RFID avec numéro préenregistré peut aussi convenir à condition de doter le terminal de paiement des moyens de lecture adéquats. Dans un souci de rendre les explications plus fluides, on parlera de carte quelque soit le type de support matériel retenu.

En étape 12, le commerçant soumet une carte vierge aux moyens de lecture/écriture du terminal 1. Ces moyens de lecture/écriture se présentent par exemple sous forme de la fente 5 illustrée en figure 1 agencée pour y introduire la carte. On peut aussi prévoir d'autres moyens de lecture/écriture tels que ceux pour bande magnétique ou sans contact. On entend par carte vierge une carte dont la mémoire est vide ou plus généralement dont aucun contenu n'est associé partiellement ou totalement à un fichier de mise en oeuvre du procédé dans le terminal 1.

Le programme de création précédemment décrit, comprend des instructions 122 pour détecter une présence de carte vierge. Une absence de carte vierge peut correspondre tout simplement à la première variante de mise en oeuvre. Une détection de carte vierge se poursuit alors par une exécution d'instructions 123 pour jumeler la carte avec le fichier nommé par les instructions 120 du premier mode de réalisation ou avec la ligne générée par les instructions 120 du deuxième mode de réalisation. Lorsque la carte 7 est uniquement accessible en lecture, un jumelage consiste à lire un identificateur de carte (IDC) en mémoire 8 de la carte 7 et d'inscrire cet identificateur IDC dans un champ de la structure 124, prévu à cet effet. Lorsque de façon préférée, la carte 7 est réinscriptible, le jumelage consiste à écrire en mémoire 8 de la carte, la référence de la structure 124, associée au client. On peut aussi prévoir d'inscrire le NIP du client sur la carte à condition que l'accès de la mémoire 8 soit protégé comme ceci est réalisable avec une carte à microprocesseur. Non seulement pour des raisons de coût mais aussi pour des raisons de simplification de contrôle cryptographique contre toute attente dans le domaine de la sécurité de paiement, et plus encore pour des raisons de souplesse d'utilisation, on préfère stocker le NIP uniquement dans la structure 124. Il est plus facile de protéger le NIP par des algorithmes cryptographiques connus dans le terminal 1. Si le client titulaire de la carte en perd la détention pour cause de vol ou d'égarement, le client peut accorder plus de confiance à l'impossibilité pour un tiers détenant la carte de retrouver le NIP. Certains avantages en termes de souplesse d'utilisation ressortiront encore de la suite de la description du procédé.

En accord avec le commerçant, le client peut souhaiter créer une autre carte permettant d'accéder à la structure 124 qui lui est associée soit pour son usage personnel en cas de volonté de détruire la carte initiale, soit pour l'usage d'un membre de sa famille, par exemple son conjoint amené à faire des achats chez le commerçant ou son enfant qu'il envoie faire une course.

Optionnellement à cet effet, le programme de création contient des instructions 101 de détection de carte connue. Le programme contient alors des instructions 121 pour accéder à la structure 124 qui est associée à la carte, afficher la grille de saisie sous forme pré remplie et mémoriser les données nouvellement saisies. La grille de saisie pré remplie évite de devoir ressaisir l'intégralité des coordonnées du client. Si les nouvelles données saisies concernent l'adresse, le champ correspondant de la structure 124 est simplement écrasé par les nouvelles données. Pour un cas où les nouvelles données désignent un nouveau prénom, les instructions 121 sont prévues pour créer dans la structure 124, un champ supplémentaire destiné à contenir le nouveau prénom et un champ supplémentaire destiné à contenir un NIP spécialement lié au nouveau prénom.

En étape 12, le client présente sa carte initiale au terminal 1 et indique au commerçant les éventuelles données complémentaires à saisir. En fin de saisie, le commerçant présente une carte vierge au terminal puis invite le client ou le membre de sa famille à introduire son NIP à l'abri des regards.

Pour éviter que ne soient créées des cartes à l'insu du titulaire du terminal, le programme comprend des instructions 100 qui vérifient une autorisation de création pour permettre une exécution des autres instructions décrites en référence à la figure 4. Cette vérification peut se faire sur détection d'une position de clé matérielle introduite dans une serrure du terminal ou sur reconnaissance d'un numéro d'identification personnel dont seul un administrateur du terminal doit avoir connaissance.

La transition 15 est validée à détection d'un signal qui commande de créditer le moyen de paiement. Ce signal est généré par le terminal 1 lorsque l'utilisateur, par exemple presse une touche dédiée à cet effet ou une combinaison de touches alphanumériques sur le clavier 2, effleure une zone 3b tactile dédiée de l'écran 3 ou positionne un curseur sur la zone 3b au moyen de la molette 6. le signal qui commande de créditer le moyen de paiement est, à titre illustratif, traité par des instructions 150 exécutables par un processeur du terminal 1. Préférentiellement l'utilisateur est ici encore le commerçant qui est l'administrateur du terminal 4. Lorsque la deuxième variante du procédé est mise en oeuvre, on peut aussi prévoir de valider la transition 15 simplement à détection d'une introduction de la carte dans les moyens de lecture 5 du terminal 1.

Le procédé de l'invention permet au client d'approvisionner directement chez le commerçant, le compte local qui lui est associé et qui est intégralement géré dans le terminal de paiement 1 exploité par le commerçant. Il suffit au client de donner une somme d'argent au commerçant qui en crédite alors le montant sur le compte local dans le terminal 1.

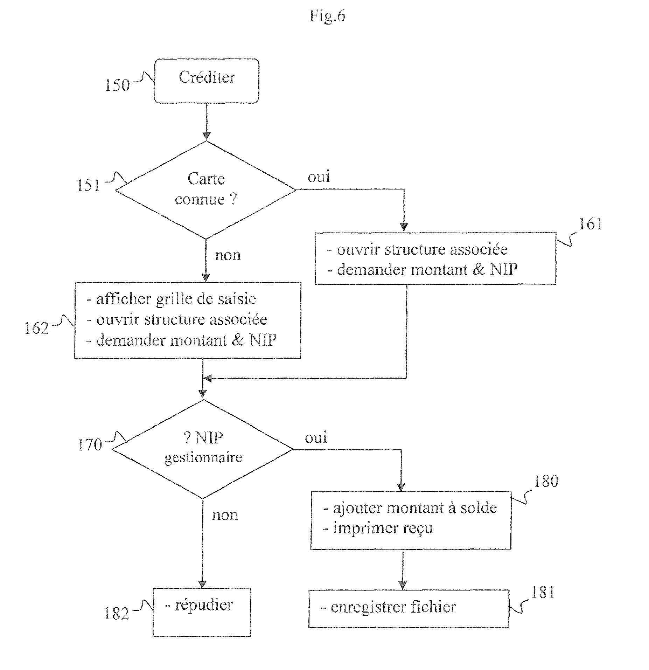

Une validation de la transition 15 active une étape 16 qui accède au compte local associé à une identification du client. Cette étape est typiquement réalisée au moyen d'instructions de programme exécutables par un processeur du terminal 1 à présent décrites en référence à la figure 6.

Pour mettre en oeuvre la première variante du procédé qui fonctionne sans nécessiter une carte telle que celle créée dans le cadre de la deuxième variante, le programme comprend des instructions 162 pour afficher une grille de saisie, ouvrir la structure associée 124 associée au données saisies puis demander le montant et le numéro d'identification personnel du gestionnaire du terminal.

La deuxième variante du procédé évite à l'utilisateur de ressaisir les coordonnées du client pour permettre au terminal 1 de retrouver le compte associé au client. Le programme contient des instructions 151 pour détecter une existence de carte par les moyens de lecture et en cas de détection, pour lire des éléments du contenu qui permettent de vérifier si la carte détectée est une carte connue, c'est-à-dire s'il existe une structure 124 répertoriée dans le terminal 1 qui est associée à la carte. Le programme contient des instructions 161 prévues pour être exécutées en cas de réponse positive aux instructions de test 151, de façon à ouvrir la structure 124 associée puis demander le montant et le numéro d'identification personnel du gestionnaire du terminal.

Quelque soit la variante de procédé mise en oeuvre, on peut prévoir d'afficher sur l'écran 3 du terminal 1, le montant du dernier solde enregistré dans la structure 124, le montant de la somme à créditer et le montant du nouveau solde.

Le programme comprend des instructions 170 pour vérifier que le numéro d'identification personnel donné est le NIP du gestionnaire. A cet effet, le terminal 1 possède en mémoire une image du NIP et les moyens cryptographiques pour vérifier la concordance du code saisi par l'utilisateur avec le NIP du gestionnaire.

C'est ici le NIP du gestionnaire qui est demandé de façon à lui permettre de valider que le montant à créditer correspond bien à une somme d'argent qui lui a été remise. La somme d'argent peut lui avoir été remise sous forme de billets de banque, de pièces de monnaie ou de chèque bancaire, voire de paiement par carte bancaire classique. Ceci permet par exemple à un père de famille d'approvisionner son compte local globalement pour en faire bénéficier d'autres membres de la famille ou pour régler leurs dettes dans la mesure où le commerçant accepte un solde négatif.

Une reconnaissance du NIP du gestionnaire valide une transition 17 qui active une étape 18 dans laquelle le compte local attribué au client, est crédité du montant de la somme affichée et validée. Avantageusement en étape 18, un reçu est imprimé et communiqué au client pour l'aider à se souvenir de la somme versée, de la date de versement et de son nouveau solde après versement.

Indépendamment de l'alternative de mise en oeuvre retenue, le programme comprend des instructions 182 pour répudier l'opération précédemment décrite en cas de réponse négative à la vérification exécutée par les instructions 170. Le programme comprend des instructions 180 pour ajouter le montant validé au crédit du compte local et pour éventuellement imprimer un reçu, en cas de réponse positive à la vérification exécutée par les instructions 170. Enfin des instructions 181 sont prévues pour enregistrer le fichier qui héberge la structure 124.

La transition 19 est validée à détection d'un signal qui commande de débiter le moyen de paiement. Ce signal est généré par le terminal 1 lorsque l'utilisateur, par exemple presse une touche dédiée à cet effet ou une combinaison de touches alphanumériques sur le clavier 2, effleure une zone 3a tactile dédiée de l'écran 3 ou positionne un curseur sur la zone 3a au moyen de la molette 6. L'utilisateur peut être le gestionnaire du terminal 4 en début de l'exécution d'une étape 20 activée par validation de la transition 19. Lorsque la deuxième variante du procédé est mise en oeuvre, on peut aussi prévoir de valider la transition 19 simplement à détection d'une introduction de la carte dans les moyens de lecture 5 du terminal 1.

Le procédé de l'invention permet au client d'effectuer des achats en débitant directement chez le commerçant, le compte local qui lui est associé et qui est intégralement géré dans le terminal de paiement 1 exploité par le commerçant. Il suffit d'accéder au compte local attribué au client dans le terminal 1.

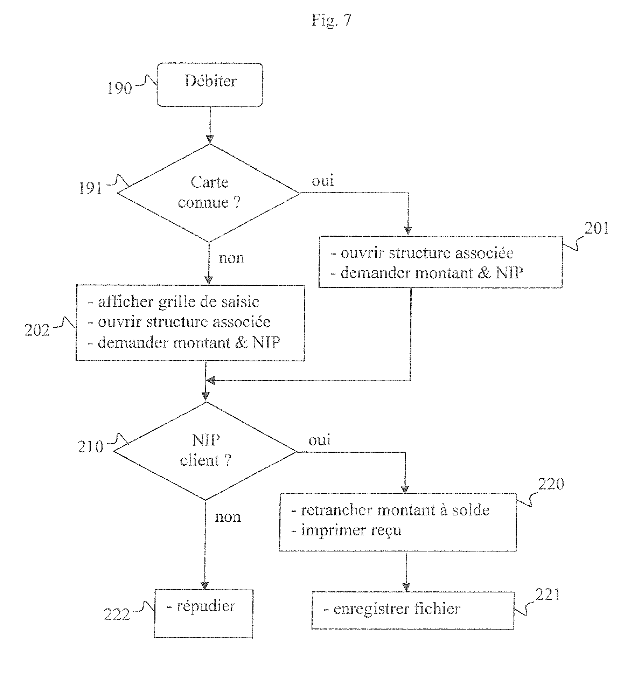

L'étape 20, activée par validation de la transition 19, accède au compte local associé à une identification du client. Cette étape est typiquement réalisée au moyen d'instructions de programme exécutables par un processeur du terminal 1 à présent décrites en référence à la figure 7.

Pour mettre en oeuvre la première variante du procédé qui fonctionne sans nécessiter une carte telle que celle créée dans le cadre de la deuxième variante, le programme comprend des instructions 202 pour afficher une grille de saisie, ouvrir la structure 124 associée au données saisies puis demander un montant à débiter et le numéro d'identification personnel du client.

La deuxième variante du procédé évite à l'utilisateur de ressaisir les coordonnées du client pour permettre au terminal 1 de retrouver le compte associé au client. Le programme contient des instructions 191 pour détecter une existence de carte par les moyens de lecture et en cas de détection, pour lire des éléments du contenu qui permettent de vérifier si la carte détectée est une carte connue, c'est-à-dire s'il existe une structure 124 répertoriée dans le terminal 1 qui est associée à la carte. Le programme contient des instructions 201 prévues pour être exécutées en cas de réponse positive aux instructions de test 191, de façon à ouvrir la structure 124 associée puis demander le montant et le numéro d'identification personnel du client.

Quelque soit la variante de procédé mise en oeuvre, on peut prévoir d'afficher sur l'écran 3 du terminal 1, le montant du dernier solde enregistré dans la structure 124, le montant de la somme à débiter et le montant du nouveau solde.

Le programme comprend des instructions 210 pour vérifier que le numéro d'identification personnel donné est le NIP du client. A cet effet, le terminal 1 possède en mémoire une image du NIP et les moyens cryptographiques pour vérifier la concordance du code saisi par l'utilisateur avec le NIP du client.

C'est ici le NIP du client qui est demandé de façon à lui permettre de valider que le montant à débiter correspond bien à un prix d'achat convenu. On notera la possibilité avantageuse de régler une transaction sans recourir à une somme d'argent sous forme de billets de banque, de pièces de monnaie ou de chèque bancaire, voire de paiement par carte bancaire classique. On notera aussi la possibilité avantageuse de régler une transaction sans recourir à un compte centralisé avec les contraintes qu'un tel recours génère en termes de communications à distance et de protections contre les possibilités de fraudes qui peuvent résulter d'une impersonnalisation de moyens centralisés.

Une reconnaissance du NIP du client valide une transition 21 qui active une étape 22 dans laquelle le compte local attribué au client, est débité du montant de la somme affichée et validée. Avantageusement en étape 22, un reçu est imprimé et communiqué au client pour l'aider à se souvenir de la somme retranchée, de la date de débit et de son nouveau solde après achat.

Indépendamment de l'alternative de mise en oeuvre retenue, le programme comprend des instructions 222 pour répudier l'opération précédemment décrite en cas de réponse négative à la vérification exécutée par les instructions 210. Le programme comprend des instructions 220 pour retrancher le montant validé au solde du compte local et pour éventuellement imprimer un reçu, en cas de réponse positive à la vérification exécutée par les instructions 210. Enfin des instructions 221 sont prévues pour enregistrer le fichier qui héberge la structure 124.

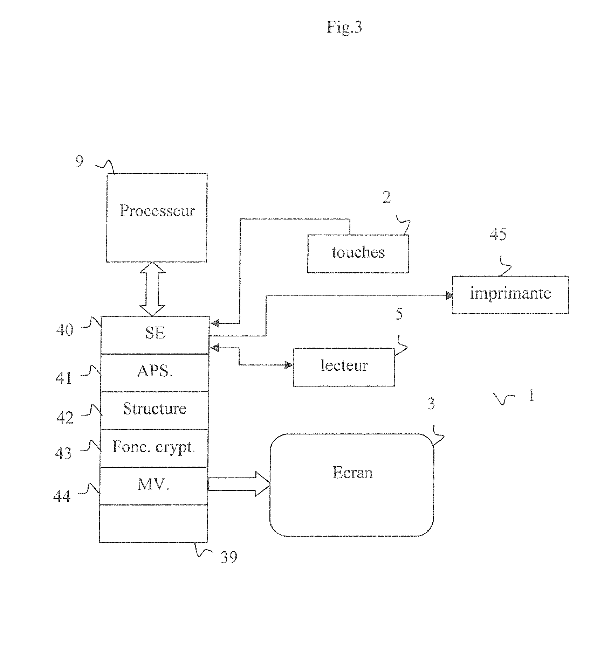

Un terminal de paiement est habituellement agencé pour effectuer des paiements en débitant un compte centralisé dans une banque et en créditant un autre compte centralisé dans la même ou une autre banque ou pour effectuer des paiements en débitant un compte localisé dans un porte-monnaie électronique et en créditant un autre compte centralisé dans une banque à distance. Pour mettre en oeuvre le procédé qui vient d'être décrit, le terminal de paiement nécessite un agencement particulier qui va maintenant être décrit en référence à la figure 3.

Pour effectuer des paiements électroniques, le terminal 1 comprend un processeur 9 et une mémoire 39. La mémoire 39 comporte une partie de mémoire permanente dans laquelle résident des programmes et des données et une partie de mémoire vive dans laquelle sont chargés le ou les programmes à exécuter, à partir de la mémoire permanente ou de moyens de télécommunication et les données nécessaires à l'exécution des programmes, à partir de la mémoire permanente, de moyens de télécommunication, du lecteur 5, des touches du clavier 2 ou de l'écran 3 lorsque des données sont associées à des coordonnées pointées par un utilisateur sur l'écran 3.

En mémoire 39, un système d'exploitation 40 est agencé pour gérer, en cours d'exécution par le processeur 9, les périphériques que sont une imprimante 45, le lecteur 5, les touches de clavier 2 et l'écran 3 pour saisir, afficher, inscrire ou imprimer des données. Le système d'exploitation 40 est aussi agencé pour gérer des programmes et des fichiers contenus en mémoire 39. Parmi les programmes, on trouve un ou plusieurs programmes 43 de traitement cryptographique et un programme d'application de paiement sécurisé 41 conforme à l'invention. Parmi les fichiers, on trouve une mémoire vidéo 44 d'affichage sur l'écran 3 et au moins un fichier 42 contenant un ou plusieurs exemplaires de la structure 124. La structure 124 est agencée pour répertorier au moins un identificateur de client tel que, à titre illustratif, son nom, son prénom et/ou son adresse. Avantageusement dans la structure 124, un numéro d'identification personnel (NIP en français ou PIN en anglais pour Personal Identification Number) de préférence sous forme chiffrée et un montant sont associés à l'identificateur de client. Le montant est par exemple celui d'un solde et éventuellement celui d'une dépense, d'un approvisionnement datés à l'image d'un livret de compte. Le programme 41 comprend les instructions précédemment expliquées en référence aux figures 4, 6 et 7. En variante, le programme 41 comprend les instructions 123 pour jumeler un exemplaire particulier de la structure 124 avec un support matériel d'information particulier 7 au moyen du lecteur 5, soit en écrivant dans la structure 124 une référence lue sur le support 7, soit en écrivant sur le support 7 au moins un identificateur de client répertorié dans la structure 124. Dans le premier cas ce sont des moyens de lecture du lecteur 5 qui sont utilisés et la structure 124 contient la référence du support 7 après jumelage. Dans le deuxième cas le lecteur 5 est doté de moyens d'écriture de sorte que le support 7 contient après jumelage, une copie d'au moins un identificateur de client contenu dans la structure 124.

Bien entendu, la présente invention n'est pas limitée aux modes de réalisation décrits à titre d'exemple.

On comprendra que d'autres dispositifs électroniques peuvent être réalisés de façon à ce qu'un même exemplaire de structure de données est ensuite mis à jour localement au gré de paiements et d'approvisionnements effectués sur le dispositif électronique pour le compte du client identifié.

## Revendications

1. Terminal (1) de paiement électronique comprenant des moyens (2,3) de saisie de données, un processeur (9) et une mémoire (39) contenant :
- une structure (124) agencée pour répertorier au moins un identificateur de client, un numéro d'identification personnel et un montant associés ;
- un programme (41) comprenant des instructions (120,130) pour mémoriser dans un exemplaire de la structure (124) après saisie, ledit identificateur de client et ledit numéro d'identification personnel.

2. Terminal (1) de paiement électronique selon la revendication 1 **caractérisé en ce qu'**il comprend des moyens (5) de lecture de support matériel d'information (7) et **en ce que** ledit programme (41) comprend des instructions (123) pour jumeler ledit support matériel d'information (7) avec ledit exemplaire de la structure (124).

3. Procédé pour permettre d'effectuer un paiement de façon locale, comprenant :
- une étape (12) pour associer dans un terminal de paiement, un compte local à un client; et
- une étape (14) pour lier au dit compte local, un numéro d'identification personnel choisi par le client et pour enregistrer ledit compte local dans le terminal de paiement.

4. Procédé selon la revendication 3 **caractérisé en ce que** dans l'étape (12) pour associer le compte local au client, un support matériel est jumelé au dit compte local.

5. Procédé selon la revendication 3 ou 4 **caractérisé en ce qu'**il comprend une étape (16, 20) pour retrouver ledit compte local dans le terminal.

6. Procédé selon la revendication 5 **caractérisé en ce que** dans l'étape (16, 20) pour retrouver ledit compte local, le terminal identifie le compte au moyen dudit support matériel.

7. Procédé selon l'une des revendications 5 à 6 **caractérisé en ce qu'**il comprend une étape (18) pour créditer dans le terminal ledit compte local avec un montant à ajouter saisi par un gestionnaire du terminal.

8. Procédé selon la revendication 7 **caractérisé en ce qu'**il comprend une étape (22) pour débiter dans le terminal ledit compte local avec un montant à retrancher saisi par le gestionnaire du terminal après validation dudit montant à retrancher au moyen du numéro d'identification personnel.

9. Procédé selon la revendication 7 ou 8 **caractérisé en ce qu'**un reçu est imprimé dans l'étape (18) pour créditer ledit montant à ajouter ou respectivement dans l'étape (22) pour débiter ledit montant à retrancher.

10. Programme de terminal de paiement comprenant des moyens de code de programme pour effectuer la totalité des étapes de l'une quelconque des revendications 3 à 9 lorsque ledit programme fonctionne sur un terminal de paiement.

11. Produit de programme d'ordinateur comprenant des moyens de code de programme stockés sur un médium lisible par un terminal de paiement pour mettre en oeuvre le procédé selon l'une quelconque des revendications 3 à 9 lorsque ledit produit de programme fonctionne sur un terminal de paiement.
